# EUROPÄISCHE PATENTSCHRIFT

(11) **EP 1 831 547 B1**
(45) Veröffentlichungstag und Bekanntmachung des Hinweises auf die Patenterteilung: **20.02.2008**
(21) Anmeldenummer: 05801506.6
(22) Anmeldetag: 31.10.2005
(51) Int. Cl.: F04B 1/053, F04B 5/02, F04B 11/00, F04B 1/04

(54) **KOLBENPUMPE MIT WENIGSTENS EINEM STUFENKOLBENELEMENT**
PISTON PUMP PROVIDED WITH AT LEAST ONE STEP PISTON ELEMENT
POMPE A PISTON COMPORTANT AU MOINS UN ELEMENT PISTON DIFFERENTIEL

(30) Priorität: 22.12.2004 DE 102004061810
(43) Veröffentlichungstag der Anmeldung: 12.09.2007
(73) Patentinhaber: ROBERT BOSCH GMBH, 70442 Stuttgart (DE)
(72) Erfinder: ALAZE, Norbert, 71706 Markgroeningen (DE); SCHULLER, Wolfgang, 74389 Cleebronn (DE); MICHL, Thomas, 70499 Stuttgart (DE); BENKERT, Frank, 71732 Tamm (DE); KARL, Andreas, 71672 Marbach/Neckar (DE); OEZKAN, Goekhan, 71691 Freiberg Am Neckar (DE); KAEFERSTEIN, Berthold, 74343 Sachsenheim (DE)
(86) Internationale Anmeldenummer: PCT/EP2005/055667
(87) Internationale Veröffentlichungsnummer: WO 2006/066994

(56) Entgegenhaltungen:
- DE-A1- 10 229 201
- US-A- 6 079 961
- US-A1- 2004 234 400

## Beschreibung

### Stand der Technik

Die Erfindung betrifft eine Kolbenpumpe mit wenigstens einem über eine Exzentereinrichtung antreibbaren und in einem Gehäuse längsbeweglich angeordneten Stufenkolbenelement gemäß der im Oberbegriff des Patentanspruches 1 näher definierten Art.

Aus der DE 199 28 913 A1 oder DE 19928913 A1 ist eine Kolbenpumpe mit einem eine Pumpenbohrung aufweisenden Pumpengehäuse sowie mit einem in der Pumpenbohrung angeordneten und in axialer Richtung antreibbaren Kolben bekannt. Der Kolben ist als Stufenkolben ausgeführt und begrenzt gemeinsam mit dem Pumpengehäuse Druckräume, die über eine Einlassventileinrichtung zum Führen von Fluid aus einem mit einem Ansaugbereich verbundenen ersten Druckraum in einen zweiten Druckraum verbindbar sind und deren Volumina in Abhängigkeit einer Bewegung des Kolbenelements variieren. Ein Volumen des ersten Druckraums wird während eines das Volumen des zweiten Druckraums vergrößernden Saughubs des Kolbens verkleinert, während das Volumen des ersten Druckraums während eines das Volumen des zweiten Druckraums verkleinernden Verdichtungshubs des Kolbens vergrößert wird. Der zweite Druckraum ist während des Verdichtungshubs über eine Auslassventileinrichtung mit einer Förderseite verbunden und durch die Einlassventileinrichtung von dem Ansaugbereich bzw. der Saugseite der Kolbenpumpe getrennt.

Die saugseitige gestufte Ausbildung des Kolbens bewirkt, dass der Volumenstrom in der Saugleitung auf die Bewegung des Kolbens im Verdichtungshub bzw. während des Druckhubs und während des Saughubs aufgeteilt werden, wodurch die Reibungsverluste der Flüssigkeit im Ausgangsbereich der Kolbenpumpe verringert werden und ein besseres Saugverhalten der Kolbenpumpe erreicht wird.

Nachteilig dabei ist jedoch, dass von der Kolbenpumpe lediglich während des Druckhubs bzw. des Verdichtungshubs des Kolbens verdichtetes Fluid aus dem zweiten Druckraum zur Förderseite der Kolbenpumpe gefördert wird, was aufgrund der ungleichmäßigen Druckpulsation zu einer unerwünschten Geräuschentwicklung führt.

Vorteile der Erfindung

Die erfindungsgemäße Kolbenpumpe ist mit wenigstens einem über eine Antriebseinrichtung antreibbaren und in einem Gehäuse längsbeweglich angeordneten Stufenkolbenelement ausgeführt. Das Stufenkolbenelement ist mit der Antriebseinrichtung derart wirkverbunden, dass über die Wirkverbindung sowohl Zug- als auch Druckkräfte übertragbar sind. Des Weiteren ist die Kolbenpumpe mit zwei jeweils von dem Stufenkolbenelement und dem Gehäuse begrenzten Druckräumen ausgebildet, die über eine Einlassventileinrichtung zum Führen von Fluid aus einem mit einem Ansaugbereich verbundenen ersten Druckraum in einen zweiten Druckraum verbindbar sind. Zusätzlich variieren die Volumina der beiden Druckräume in Abhängigkeit einer Bewegung des Kolbenelements, wobei ein Volumen des ersten Druckraums während eines das Volumen des zweiten Druckraums vergrößernden Saughubs des Stufenkolbenelements verkleinert wird und das Volumen des ersten Druckraums während eines das Volumen des zweiten Druckraums vergrößernden Verdichtungshubs des Stufenkolbenelements verkleinert wird. Der zweite Druckraum ist über eine Auslassventileinrichtung mit einer Förderseite der Kolbenpumpe verbindbar.

Zusätzlich wird ein Volumen eines mit der Förderseite verbundenen wenigstens von dem Stufenkolbenelement und dem Gehäuse begrenzten dritten Druckraums während des Verdichtungshubs des Stufenkolbenelements um einen definierten Volumenwert vergrößert und wird während des Saughubs des Stufenkolbenelements um den definierten Volumenwert verkleinert, wobei der definierte Volumenwert betragsmäßig kleiner ist als die Volumenveränderung des zweiten Druckraums während des Verdichtungshubs des Stufenkolbenelements.

Dies führt erfindungsgemäß zu einer Verteilung des von der Kolbenpumpe zur Förderseite der Kolbenpumpe geförderten Fluidvolumenstroms auf die Saughubphase und die Verdichtungshubphase des Stufenkolbenelements. Die förderseitige Verteilung des Fluidvolumenstroms bewirkt eine Reduzierung der Reibungsverluste der Flüssigkeit in den förderseitigen Leitungen der Kolbenpumpe, wodurch ein besseres Förderverhalten der Kolbenpumpe mit im Vergleich zu herkömmlichen Kolbenpumpe geringeren Betriebsgeräuschen erzielt wird.

Grundsätzlich ist mit der erfindungsgemäßen Ausgestaltung der Kolbenpumpe auf der Förderseite der Kolbenpumpe ein über einen Betriebszyklus der Kolbenpumpe vergleichmäßigter Volumenstrom und damit einhergehenden geringen Betriebsgeräuschen darstellbar, womit eine Verwendung der Kolbenpumpe nach der Erfindung in einem Bremssystem eines Fahrzeugs, wie einem ESP-System, einem EHB-System oder dgl., vorteilhafterweise zu einer Verbesserung des Fahrkomforts führt.

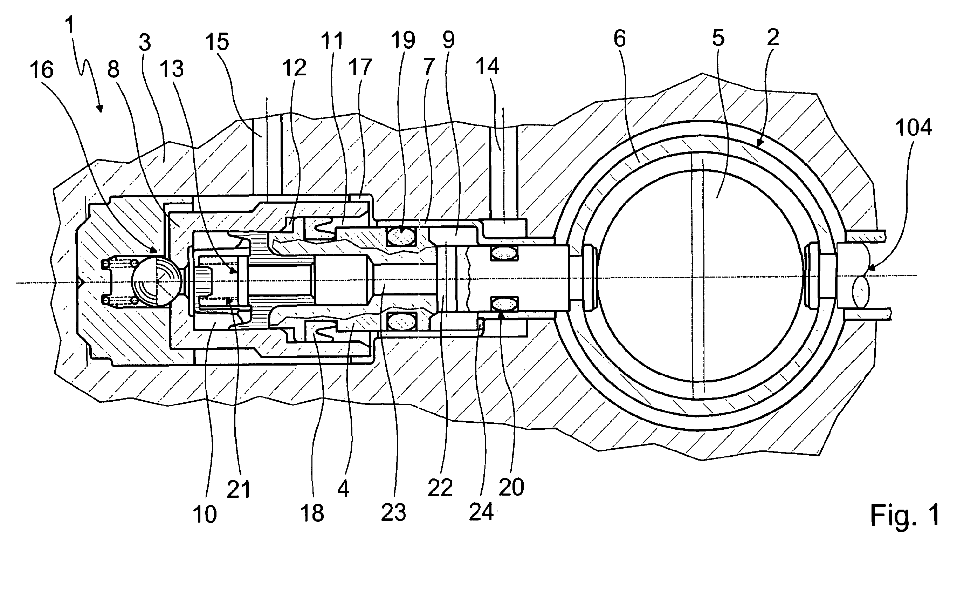

Weitere Vorteile und vorteilhafte Ausgestaltungen des Gegenstandes nach der Erfindung sind der Beschreibung, der Zeichnung und den Patentansprüchen entnehmbar.

Zeichnung

In der Zeichnung ist ein bevorzugtes Ausführungsbeispiel einer erfindungsgemäß ausgebildeten Kolbenpumpe schematisch vereinfacht dargestellt, welches in der nachfolgenden Beschreibung näher erläutert wird.

Die einzige Figur der Zeichnung zeigt eine Kolbenpumpe nach der Erfindung in einer schematisierten Längsschnittansicht.

### Beschreibung des Ausführungsbeispiels

In der Figur ist eine Kolbenpumpe 1 mit einem über eine Antriebseinrichtung 2 antreibbaren und in einem Gehäuse 3 längsbeweglich angeordneten Stufenkolbenelement 4 in einem Teillängsschnitt dargestellt. Die Antriebseinrichtung 2 ist vorliegend als eine Exzentereinrichtung ausgeführt, so dass das Stufenkolbenelement 4 in Abhängigkeit einer Drehbewegung einer vorzugsweise von einem nicht näher dargestellten Elektromotor angetriebenen Exzenterwelle 5 zwischen zwei Endstellungen, d.h. einem oberen Totpunkt und einem unteren Totpunkt, in axialer Richtung verstellt wird.

Mit seinem der Antriebseinrichtung 2 zugewandten Ende ist das Stufenkolbenelement 4 mit einem Exzenterring 6 verbunden, so dass das Stufenkolbenelement 4 mit der Antriebseinrichtung 2 derart wirkverbunden ist, dass über die Wirkverbindung sowohl Zug- als auch Druckkräfte übertragbar sind. Der Bereich des Stufenkolbenelements 4, der den Exzenterring 6 durchgreift, ist sowohl gegenüber dem Bereich des Stufenkolbenelements 4, der auf der der Exzenterwelle 5 abgewandten Seite des Exzenterrings 6 angeordnet ist, als auch gegenüber dem Bereich des Stufenkolbenelements 4, der auf der der Exzenterwelle 5 zugewandten Seite des Exzenterrings 6 angeordnet ist, mit einem reduzierten Außendurchmesser ausgeführt. Die Wirkverbindung ist somit zwischen dem Stufenkolbenelement 4 und dem Exzenterring 6 formschlüssig hergestellt.

In Bezug auf das Stufenkolbenelement 4 ist auf der gegenüberliegenden Seite der Exzenterwelle 5 ein weiteres Stufenkolbenelement 104, das in der selben Art und Weise wie das Stufenkolbenelement 4 mit der Antriebseinrichtung 2 verbunden ist und um 180° phasenversetzt zu dem Kolbenelement 4 von der Antriebseinrichtung 2 angesteuert wird, einer weiteren Kolbenpumpe angeordnet, die prinzipiell den selben Aufbau aufweist wie die Kolbenpumpe 1 und zur bedarfsweisen Versorgung eines weiteren Druckkreises eines Fahrzeugbremssystems vorgesehen ist.

Darüber hinaus begrenzen das Gehäuse 3 und das Stufenkolbenelement 4 gemeinsam mit einer gehäusefesten Führungshülse 7 und einem gehäuseseitig festgelegten Einsatzelement 8 mehrere Druckräume 9 bis 12. Dabei ist ein mit einem Ansaugbereich 14 der Kolbenpumpe 1 in Wirkverbindung stehender erster Druckraum 9 über eine Einsatzventileinrichtung 13 mit einem zweiten Druckraum 10 verbindbar, um das aus dem Ansaugbereich 14 der Kolbenpumpe angesaugte Hydraulikfluid einer Förderseite 15 der Kolbenpumpe 1, beispielsweise einem Druckkreis eines Fahrzeugbremssystems, zuzuführen.

Die Volumina der Druckräume 9 bis 12 variieren jeweils in Abhängigkeit der Bewegung des Stufenkolbenelements 4, wobei ein Volumen des ersten Druckraums 9 während eines das Volumen des zweiten Druckraums 10 vergrößernden Saughubs des Stufenkolbenelements 4 verkleinert wird und während eines das Volumen des zweiten Druckraums vergrößernden Verdichtungshubs des Stufenkolbenelements 4 verkleinert wird.

Um den für die Funktionsweise der Kolbenpumpe erforderlichen Druckaufbau im zweiten Druckraum 10 zu ermöglichen, ist die Einlassventileinrichtung 13 während des Verdichtungshubs des Stufenkolbenelements 4 geschlossen. Ab Erreichen eines vordefinierten Druckwerts in dem zweiten Druckraum 10 wird eine den zweiten Druckraum 10 in geschlossenem Zustand von der Förderseite 15 der Kolbenpumpe 1 trennende Auslassventileinrichtung 16 geöffnet und das während des Verdichtungshubs des Kolbenelements 4 ausgehend von seinem unteren Totpunkt in Richtung seines oberen Totpunkts verdichtete Fluid wird aus dem zweiten Druckraum 10 in Richtung der Förderseite 15 der Kolbenpumpe 1 gefördert.

Des Weiteren wird ein dritter Druckraum 11 von dem Stufenkolbenelement 4, dem Einsatzelement 8 und dem Gehäuse 3 begrenzt, der über Schlitze 17 der Führungshülse 7 mit der Förderseite 15 permanent verbunden ist.

Zusätzlich ist zwischen dem Einsatzelement 8 und dem Stufenkolbenelement 4 ein vierter Druckraum 12 vorgesehen, der mittels einer so genannten Überströmmanschette 18 gegenüber dem dritten Druckraum 11 abgedichtet ist. Der dritte Druckraum 11 ist wiederum gegenüber dem ersten Druckraum 9 im Bereich zwischen der Führungshülse 7 und dem Stufenkolbenelement 4 über eine Dichteinrichtung 19 und zwischen dem Gehäuse 3 und der Führungshülse 7 über eine abdichtende partielle Presspassung zwischen der Führungshülse 7 und dem Gehäuse 3 abgedichtet. Zudem ist der erste Druckraum 9 sowie der Ansaugbereich 14 der Kolbenpumpe 1 gegenüber der Antriebseinrichtung 2 über eine zwischen dem Stufenkolbenelement 4 und der Führungshülse 7 angeordnete Dichtungseinrichtung 20 und eine Presspassung zwischen der Führungshülse 7 und dem Gehäuse 3 abgedichtet.

Die vorteilhafte Funktionsweise der erfindungsgemäßen Ausgestaltung der Kolbenpumpe 1 wird anhand der nachfolgenden Beschreibung näher erläutert:

Wird das Stufenkolbenelement 4 ausgehend von seinem unteren Totpunkt, in dem der erste Druckraum 9, der vorliegend als ein von der Führungshülse 7 und dem Stufenkolbenelement 4 begrenzter Ringraum ausgeführt ist, sein minimalstes Volumen aufweist, in Richtung seines oberen Totpunkts bewegt, in dem der erste Druckraum 9 sein maximales Volumen aufweist, wird das Volumen des zweiten Druckraums 10 zunehmend verkleinert. Dabei steigt der Druck im zweiten Druckraum 10 an. Während dieser Phase ist die Einlassventileinrichtung 13 aufgrund der Federkraft einer Federeinrichtung 21 und des positiven Druckgefälles zwischen dem zweiten Druckraum 10 und dem ersten Druckraum 9, die bei geöffneter Einlassventileinrichtung 13 über eine Querbohrung 22 und eine Längsbohrung 23 des Stufenkolbenelements 4 verbunden sind, geschlossen.

Das bedeutet, dass während eines Verdichtungshubs des Stufenkolbenelements 4 das Volumen des zweiten Druckraums 10 verkleinert wird und das Volumen des ersten Druckraums 9, der über wenigstens eine Bohrung 24 der Führungshülse 7 mit dem Ansaugbereich 14 der Kolbenpumpe 1 verbunden ist, vergrößert wird. Dabei sind die Flächenverhältnisse der Kolbenstufen des Stufenkolbenelements 4 derart dimensioniert, dass die Volumenänderung des ersten Druckraums 9 in etwa der Hälfte der Volumenänderung des zweiten Druckraums 10 während eines Verdichtungshubs oder eines Saughubs des Stufenkolbenelements 4 entspricht.

Dadurch wird erreicht, dass sowohl während eines Verdichtungshubs als auch während eines Saughubs des Stufenkolbenelements 4 das halbe Hubvolumen der Kolbenpumpe 1 von der Saugseite in Richtung des zweiten Druckraums 10 geführt wird. Während des Saughubs des Stufenkolbenelements 4 wird die andere Hälfte des in Richtung des zweiten Druckraums 10 zu führenden Hubvolumens aus dem ersten Druckraum 9 verwendet, um den zweiten Druckraum 10 vollständig zu befüllen.

Gleichzeitig variiert das Volumen des mit der Förderseite 15 der Kolbenpumpe 1 verbundenen dritten Druckraums 11 während des Verdichtungshubs oder des Saughubs des Stufenkolbenelements 4 in etwa um die Hälfte des Hubvolumens der Kolbenpumpe 1 bzw. der Volumenänderung des zweiten Druckraums 10. Dabei wird das Volumen des dritten Druckraums 11 während des Verdichtungshubs des Kolbenelements 4 um die Hälfte des Hubvolumens des zweiten Druckraums 10 vergrößert und während eines Saughubs des Stufenkolbenelements 4 um das halbe Hubvolumen des zweiten Druckraums 10 verkleinert.

Dies hat zur Folge, dass während des Saughubs des Stufenkolbenelements 4, während dem die Auslassventileinrichtung 16 geschlossen ist, aus dem zweiten Druckraum 10 kein Fluid in Richtung der Förderseite 15 der Kolbenpumpe 1 geführt wird und das Volumen des dritten Druckraums 11 verkleinert wird, trotzdem eine Förderung von Hydraulikfluid zu mit der Förderseite 15 der Kolbenpumpe 1 verbundenen Verbrauchern stattfindet.

Zusätzlich wird durch die Anordnung des dritten Druckraums 11 bewirkt, dass während des Verdichtungshubs des Stufenkolbenelements 4, bei dem das komplette Hubvolumen des zweiten Druckraums 10 über die geöffnete Auslassventileinrichtung 16 in Richtung der Förderseite 15 geführt wird, lediglich das halbe Hubvolumen des zweiten Druckraums 10 zu den mit der Förderseite 15 verbundenen Verbrauchern gepumpt wird. Dies resultiert aus der Tatsache, dass die andere Hälfte des geförderten Hubvolumens des zweiten Druckraums 10 in dem am Ende des Verdichtungshubs des Stufenkolbenelements 4 um das halbe Hubvolumen des zweiten Druckraums 10 vergrößerten dritten Druckraum 11 aufgenommen ist und für die vorbeschriebene kolbenpumpenförderseitige Förderung von Hydraulikfluid während des Saughubs des Kolbenelements 4 zwischengespeichert wird.

Im vierten Druckraum 12 baut sich im Betrieb der Kolbenpumpe 1 in Abhängigkeit der Bewegung des Stufenkolbenelements 4 jeweils ein Unterdruck bzw. ein geringer Überdruck auf. Wird der vierte Druckraum 12 während des Betriebs der Kolbenpumpe über die Dichtungsleckage ausgehend vom zweiten Druckraum 10 mit Fluid - beim Einsatz der Kolbenpumpe in einem Bremssystem mit Bremsflüssigkeit - befüllt, wird das evtl. überschüssige Volumen im vierten Druckraum 12 über die Überströmmanschette 18 in Richtung des dritten Druckraums 11 abgebaut.

## Patentansprüche

1. Kolbenpumpe (1) mit wenigstens einem über eine Antriebseinrichtung (2) antreibbaren und in einem Gehäuse (3) längsbeweglich angeordneten Stufenkolbenelement (4), das mit der Antriebseinrichtung (2) derart wirkverbunden ist, dass über die Wirkverbindung sowohl Zug- als auch Druckkräfte übertragbar sind, und mit jeweils wenigstens zwei Druckräumen (9, 10), die über eine Einlassventileinrichtung (13) zum Führen von Fluid aus dem mit einem Ansaugbereich (14) verbundenen ersten Druckraum (9) in den zweiten Druckraum (10) verbindbar sind und deren Volumina in Abhängigkeit einer Bewegung des Stufenkolbenelements (4) variieren, wobei ein Volumen des ersten Druckraums (9) während eines das Volumen des zweiten Druckraums (10) vergrößernden Saughubs des Stufenkolbenelements (4) verkleinert wird und das Volumen des ersten Druckraums (9) während eines das Volumen des zweiten Druckraums (10) vergrößernden Verdichtungshubs des Stufenkolbenelements (4) verkleinert wird, und wobei der zweite Druckraum (10) über eine Auslassventileinrichtung (16) mit einer Förderseite (15) verbindbar ist, **dadurch gekennzeichnet, dass** ein Volumen eines mit der Förderseite (15) verbundenen und wenigstens von dem Stufenkolbenelement (4) und dem Gehäuse (3) begrenzten dritten Druckraums (11) während des Verdichtungshubs des Stufenkolbenelements (4) um einen definierten Volumenwert vergrößert wird und während dem Saughub des Stufenkolbenelements (4) um den definierten Volumenwert verkleinert wird, wobei der definierte Volumenwert betragsmäßig kleiner ist als die Volumenveränderung des zweiten Druckraums (10) während des Verdichtungshubs des Stufenkolbenelements (4).

2. Kolbenpumpe nach Anspruch 1, **dadurch gekennzeichnet, dass** zwischen dem Stufenkolbenelement (4) und dem Gehäuse (3) eine gestufte Führungshülse (7) vorgesehen ist, die wenigstens teilweise eine Begrenzung des ersten Druckraums (9) gegenüber dem Ansaugbereich (14) darstellt.

3. Kolbenpumpe nach Anspruch 2, **dadurch gekennzeichnet, dass** der erste Druckraum (9) über eine Bohrung (24) der Führungshülse (7) mit dem Ansaugbereich (14) in Verbindung steht.

4. Kolbenpumpe nach Anspruch 2 oder 3, **dadurch gekennzeichnet, dass** die Führungshülse (7) wenigstens teilweise eine Begrenzung des dritten Druckraums (11) gegenüber der Förderseite (15) darstellt.

5. Kolbenpumpe nach einem der Ansprüche 2 bis 4, **dadurch gekennzeichnet, dass** der dritte Druckraum (11) über wenigstens einen Schlitz (17) der Führungshülse (7) mit der Förderseite (15) verbunden ist.

6. Kolbenpumpe nach einem der Ansprüche 1 bis 5, **dadurch gekennzeichnet, dass** der zweite Druckraum (10) von einem gehäuseseitig festgelegten Einsatzelement (8) und dem Stufenkolbenelement (4) begrenzt ist.

7. Kolbenpumpe nach einem Ansprüche 2 bis 6, **dadurch gekennzeichnet, dass** der dritte Druckraum (11) von dem Stufenkolbenelement (4), der Führungshülse (7) und dem Einsatzelement (8) begrenzt ist.

8. Kolbenpumpe nach einem der Ansprüche 2 bis 7, **dadurch gekennzeichnet, dass** die Führungshülse (7) über eine partielle, den Ansaugbereich (14) gegenüber der Förderseite (15) abdichtende Presspassung im Gehäuse (3) festgelegt ist.

9. Kolbenpumpe nach einem der Ansprüche 6 bis 8, **dadurch gekennzeichnet, dass** von dem Stufenkolbenelement (4) und dem Einsatzelement (8) ein vierter Druckraum (12) begrenzt ist, der durch eine Überströmmanschette (18) gegenüber dem dritten Druckraum (11) abgedichtet ist und dessen Volumen in Abhängigkeit der Bewegung des Stufenkolbenelements (4) variiert.

10. Kolbenpumpe nach Anspruch 9, **dadurch gekennzeichnet, dass** die Überströmmanschette (18) mit einer derartigen Dichtfunktion ausgebildet ist, dass ein positives Druckgefälle zwischen dem vierten Duckraum (12) und dem dritten Druckraum (11) über die Überströmmanschette (18) in Richtung des dritten Druckraums (11) abbaubar ist.

11. Kolbenpumpe nach einem der Ansprüche 1 bis 10, **dadurch gekennzeichnet, dass** der definierte Volumenwert, um den das Volumen des dritten Druckraums (11) in Abhängigkeit der Bewegung des Stufenkolbenelements (4) variiert, wenigstens annähernd der Hälfte des Betrags der Volumenänderung des zweiten Druckraums (10) entspricht.

12. Kolbenpumpe nach einem der Ansprüche 1 bis 11, **dadurch gekennzeichnet, dass** die Flächenverhältnisse der wirksamen Stirnflächen des Stufenkolbenelements (4) derart vorgesehen sind, dass sich das in Abhängigkeit der Bewegung des Stufenkolbenelements (4) einstellende Volumen des ersten Druckraums (9) jeweils wenigstens annähernd um die Hälfte des Betrags der Volumenänderung des zweiten Druckraums (10) verändert.

## Claims

1. Piston pump (1) with at least one step-piston element (4) which is driveable via a drive device (2) and is arranged longitudinally movably in a housing (3) and which is operatively connected to the drive device (2) in such a way that both tensile and compressive forces can be transmitted via the operative connection, and in each case with at least two pressure spaces (9, 10) which are connectable via an inlet-valve device (13) for the routing of fluid out of the first pressure space (9) connected to a suction-intake region (14) into the second pressure space (10) and the volumes of which vary as a function of a movement of the step-piston element (4), a volume of the first pressure space (9) being reduced during a suction stroke, increasing the volume of the second pressure space (10), of the step-piston element (4), and the volume of the first pressure space (9) being reduced during a compression stroke, increasing the volume of the second pressure space (10), of the step-piston element (4), and the second pressure space (10) being connectable to a conveying side (15) via an outlet-valve device (16), **characterized in that** a volume of a third pressure space (11), connected to the conveying side (15) and delimited at least by the step-piston element (4) and the housing (3), is increased during the compression stroke of the step-piston element (4) by the amount of a defined volume value and is reduced during the suction stroke of the step-piston element (4) by the amount of the defined volume value, the defined volume value being lower in amount than the variation in volume of the second pressure space (10) during the compression stroke of the step-piston element (4).

2. Piston pump according to Claim 1, **characterized in that**, between the step-piston element (4) and the housing (3), a stepped guide sleeve (7) is provided, which at least partially constitutes a boundary of the first pressure space (9) with respect to the suction-intake region (14).

3. Piston pump according to Claim 2, **characterized in that** the first pressure space (9) is connected to the suction-intake region (14) via a bore (24) of the guide sleeve (7).

4. Piston pump according to Claim 2 or 3,
**characterized in that** the guide sleeve (7) at least partially constitutes a boundary of the third pressure space (11) with respect to the conveying side (15).

5. Piston pump according to one of Claims 2 to 4, **characterized in that** the third pressure space (11) is connected to the conveying side (15) via at least one slot (17) of the guide sleeve (7).

6. Piston pump according to one of Claims 1 or 5, **characterized in that** the second pressure space (10) is delimited by an insert element (8) secured on the housing side and by the step-piston element (4).

7. Piston pump according to one of Claims 2 or 6, **characterized in that** the third pressure space (11) is delimited by the step-piston element (4), by the guide sleeve (7) and by the insert element (8).

8. Piston pump according to one of Claims 2 to 7, **characterized in that** the guide sleeve (7) is secured in the housing (3) via a partial press fit sealing off the suction-intake region (14) with respect to the conveying side (15).

9. Piston pump according to one of Claims 6 to 8, **characterized in that** the step-piston element (4) and the insert element (8) delimit a fourth pressure space (12) which is sealed off with respect to the third pressure space (11) by means of an overflow collar (18) and the volume of which varies as a function of the movement of the step-piston element (4).

10. Piston pump according to Claim 9, **characterized in that** the overflow collar (18) is designed with a sealing function such that a positive pressure gradient between the fourth pressure space (12) and the third pressure space (11) can be broken down in the direction of the third pressure space (11) via the overflow collar (18).

11. Piston pump according to one of Claims 1 to 10, **characterized in that** the defined volume value by which the volume of the third pressure space (11) varies as a -function of the movement of the step-piston element (4) corresponds at least approximately to half the amount of the change in volume of the second pressure space (10).

12. Piston pump according to one of Claims 1 to 11, **characterized in that** the area ratios of the effective end faces of the step-piston element (4) are provided such that the volume of the first pressure space (9) which is established as a function of the movement of the step-piston element (4) varies in each case at least approximately by half the amount of the change in volume of the second pressure space (10).

## Revendications

1. Pompe à piston (1) ayant au moins un élément en forme de piston étagé (4) mobile longitudinalement dans un boîtier (3) et entraîné par une installation d'entraînement (2), cet élément de piston coopérant avec l'installation d'entraînement (2) de façon que la liaison de coopération transmette à la fois des forces de traction et des forces de compression, et ayant au moins deux chambres de pression (10) reliées par une installation de soupape d'entrée (13) pour conduire le fluide de la première chambre de pression (9) reliée à la plage d'admission (14) à la seconde chambre de pression (10) et dont le volume varie en fonction du mouvement de l'élément de piston étagé (4),
le volume de la première chambre de pression (9) diminuant pendant que la course d'admission de l'élément de piston étagé (4) augmente le volume de la seconde chambre de pression (10) et le volume de la première chambre de pression (9) diminue pendant une course de compression de l'élément de piston étagé (4) qui augmente le volume de la seconde chambre de pression (10) et
la seconde chambre de pression (10) est reliée par une installation de soupape d'échappement (14) au côté refoulement (15),
**caractérisée en ce qu'**
un volume d'une troisième chambre de pression (11) reliée au côté refoulement (15) et délimitée au moins par l'élément de piston étagé (4) et le boîtier (3), est augmenté d'un volume défini au cours de la course de compression de l'élément de piston étagé (4) et est diminué d'un volume défini pendant la course d'aspiration de l'élément de piston étagé (4),
le volume défini est de valeur plus faible que la variation de volume de la seconde chambre de pression (10) au cours de la course de compression de l'élément de piston étagé (4).

2. Pompe à piston selon la revendication 1,
**caractérisée par**
un manchon de guidage étagé (7) entre l'élément de piston étagé (4) et le boîtier (3), ce manchon représentant au moins en partie une délimitation de la première chambre de pression (9) par rapport à la plage d'admission (14).

3. Pompe à piston selon la revendication 2,
**caractérisée en ce que**
la première chambre de pression (9) est reliée par un perçage (24) du manchon de guidage (7) à la plage d'aspiration (14).

4. Pompe à piston selon la revendication 2 ou 3,
**caractérisée en ce que**
le manchon de guidage (7) représente au moins en partie une délimitation de la troisième chambre de pression (11) par rapport au côté refoulement (15).

5. Pompe à piston selon l'une des revendications 2 à 4,
**caractérisée en ce que**
la troisième chambre de pression (11) est reliée par au moins une fente (17) du manchon de guidage (7) au côté refoulement (15).

6. Pompe à piston selon l'une des revendications 1 à 5,
**caractérisée en ce que**
la seconde chambre de pression (10) est délimitée par un élément formant insert (8) fixé côté boîtier et par le piston étagé (4).

7. Pompe à piston selon l'une des revendications 2 à 6,
**caractérisée en ce que**
la troisième chambre de pression (11) est délimitée par l'élément de piston étagé (4), le manchon de guidage (7) et l'élément formant insert (8).

8. Pompe à piston selon l'une des revendications 2 à 7,
**caractérisée en ce que**
le manchon de guidage (7) est fixé par un ajustage pressé dans le boîtier (3), assurant partiellement l'étanchéité de la zone d'aspiration (14) par rapport au côté refoulement (15).

9. Pompe à piston selon l'une des revendications 6 à 8,
**caractérisée en ce qu'**
une quatrième chambre de pression (12) est délimitée par l'élément de piston étagé (4) et par l'élément formant insert (8), cette quatrième chambre de pression étant séparée de manière étanche de la troisième chambre de pression (11) par l'intermédiaire d'un manchon de débordement (18) et son volume varie en fonction du mouvement de l'élément de piston étagé (4).

10. Pompe à piston selon la revendication 9,
**caractérisée en ce que**
le manchon de débordement (18) a une fonction d'étanchéité réduisant une chute de pression positive entre la quatrième chambre de pression (12) et la troisième chambre de pression (11), par le manchon de débordement (18) en direction de la troisième chambre de pression (11).

11. Pompe à piston selon l'une des revendications 1 à 10,
**caractérisée en ce que**
le volume défini est modifié selon le volume de la troisième chambre de pression (11) en fonction du mouvement de l'élément de piston étagé (4), et il correspond au moins approximativement à la moitié de l'amplitude de la variation de volume de la seconde chambre de pression (10).

12. Pompe à piston selon l'une des revendications 1 à 11,
**caractérisée en ce que**
les rapports de surfaces entre les surfaces frontales actives de l'élément de piston étagé (4) sont tels qu'en fonction du mouvement de l'élément de piston étagé (4), le volume qui s'établit dans la première chambre de pression (9) varie au moins sensiblement de la moitié de l'amplitude de la variation de volume de la seconde chambre de pression (10).
